# FASCICULE DE BREVET EUROPEEN

(11) **EP 2 379 236 B1**
(45) Date de publication et mention de la délivrance du brevet: **24.10.2012**
(21) Numéro de dépôt: 09803769.0
(22) Date de dépôt: 23.12.2009
(51) Int. Cl.: B08B 7/00, B08B 15/04, B23K 26/14, B23K 9/32

(54) **EMBOUCHURE D'AVALOIR D'ASPIRATION DE PARTICULES FINES ET DISPOSITIF D'ABLATION LASER D'UNE COUCHE SUPERFICIELLE D'UNE PAROI COMPRENANT UN TEL AVALOIR**
MÜNDUNG EINER HAUBE ZUM ABSAUGEN VON FEINTEILCHEN UND LASERVORRICHTUNG ZUR ABLATION EINER OBERFLÄCHENSCHICHT EINER WAND MIT SOLCH EINER HAUBE
MOUTH OF A HOOD FOR SUCKING UP FINE PARTICLES, AND LASER DEVICE FOR ABLATING A SURFACE LAYER OF A WALL COMPRISING SUCH A HOOD

(30) Priorité: 23.12.2008 FR 0859043
(43) Date de publication de la demande: 26.10.2011
(73) Titulaire: Commissariat à l'Énergie Atomique et aux Énergies Alternatives, 75015 Paris (FR)
(72) Inventeur: CHAMPONNOIS, François, F-91440 Bures Sur Yvette (FR); LECOFFRE, Yves, F-38700 La Tronche (FR)
(74) Mandataire: Callon de Lamarck, Jean-Robert
(86) Numéro de dépôt international: PCT/EP2009/067892
(87) Numéro de publication internationale: WO 2010/072825

(56) Documents cités:
- EP-A1- 0 823 292
- GB-A- 2 119 503

## Description

### DOMAINE TECHNIQUE GENERAL

L'invention concerne un avaloir d'aspiration de particules fines, notamment utilisé dans un dispositif pour l'ablation laser d'une couche superficielle d'une paroi tel qu'un revêtement mural de peinture, par exemple dans une installation nucléaire.

### ETAT DE LA TECHNIQUE

La décontamination et l'assainissement des installations nucléaires devenues obsolètes ou ayant atteint leur limite d'âge sont devenus une priorité pour l'industrie nucléaire. On s'efforce de nettoyer les parties contaminées de ces installations, en évitant de produire des déchets également contaminés et en tâchant de minimiser les effluents de nettoyage.

Une solution connue pour effectuer la décontamination d'installations nucléaires consiste à utiliser l'ablation laser.

Le document GB-A-2119 503 qui est le document de l'état de la technique le plus proche décrit un dispositif d'aspiration de particules fines selon la revendication 1.

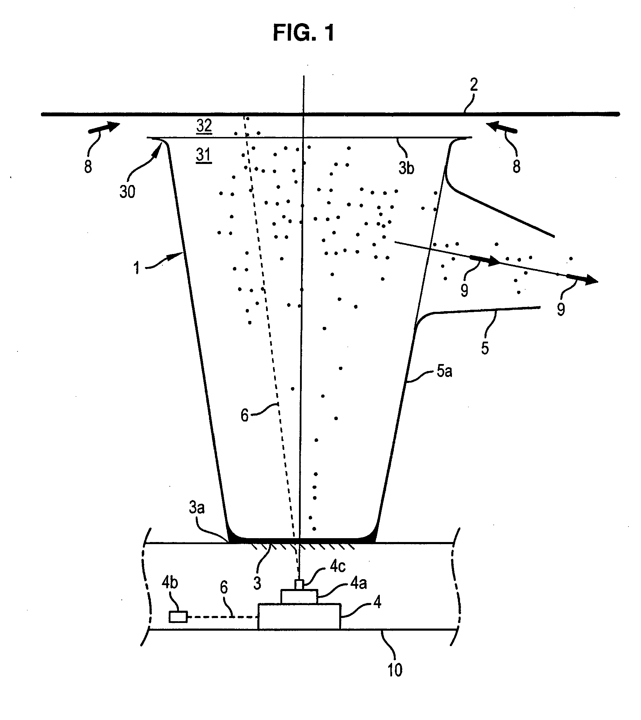

Le document FR 2 887 161 décrit un dispositif d'ablation laser pour ablater une couche de peinture murale à décontaminer, par exemple dans une installation nucléaire. On a représenté sur la figure 1 un tel dispositif.

Un tel dispositif comprend un bâti 10 sur lequel est montée au moins une source laser 4b, un déflecteur 4 optique monté en aval de la source laser 4b pour recevoir les faisceaux laser 6. Le déflecteur 4 optique comporte à sa sortie une tête 4a de déflection comprenant une lentille de focalisation 4c pour focaliser les faisceaux laser 6 sur une couche 2 à ablater.

L'ablation laser consiste à retirer une couche d'épaisseur réduite du matériau contaminant à enlever, via l'interaction de faisceaux laser focalisés issue de la source laser 4b avec ce matériau. Lors de l'impact du laser, le matériau se délite et il se crée des particules de dimensions très variées, les plus fines ayant une dimension caractéristique très inférieure au micron.

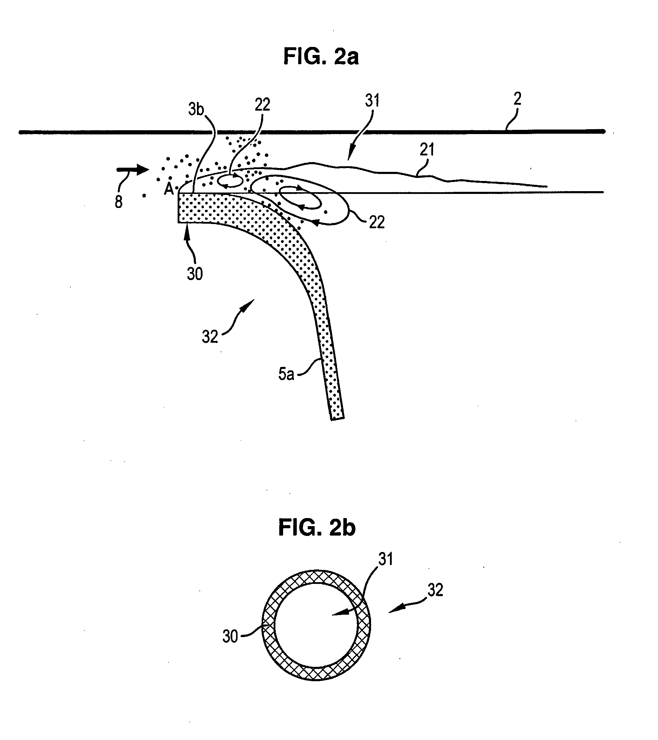

Les particules étant contaminées, afin d'éviter qu'elles ne se propagent dans l'atmosphère on prévoit un avaloir 1 comprenant une embouchure 30 d'entrée d'air comportant une crête 3b que l'on dispose à proximité de la paroi 2. La crête 3b définit une partie interne 31 et une partie externe 32 (voir aussi figures 2a et 2b).

On entend par crête 3b l'ensemble des points de l'embouchure situés à une même cote ou altitude pour former un sommet sur l'embouchure. La crête 3b est ainsi l'ensemble des points de l'embouchure 30 situés au plus près de la paroi 2, en fonctionnement, comme on l'explique dans la suite.

L'avaloir comprend en outre une sortie d'aspiration 5 pour aspirer les particules.

L'avaloir 1 est appliqué à proximité de la paroi 2 comme illustré sur la figure 1. De l'air 8 entre dans l'avaloir par l'embouchure 30. L'air 8 se charge en particules produites par le laser et cet air 9, chargé en particules, est évacué au travers de la sortie d'aspiration 5a.

L'avaloir connu présente des inconvénients.

On a représenté sur la figure 2a une vue détaillée d'une embouchure 30 connue.

L'embouchure 30 comporte un bord d'attaque A dont l'angle est vif. Un tel bord d'attaque A provoque un décollement d'air 21 qui s'éloigne de la surface de l'embouchure, engendrant un écoulement turbulent de l'air 8, qui crée des tourbillons 22 d'air au niveau de l'embouchure.

Du fait des tourbillons 22, des particules contaminées peuvent se déposer au niveau de la crête 3b de l'embouchure 30. Ces particules déposées peuvent ensuite s'échapper de l'avaloir lors d'une manipulation ultérieure de ce dernier.

De plus, les tourbillons 22 peuvent repousser vers l'extérieur 32 de l'avaloir des particules contaminées sur le point d'être aspirées.

### PRESENTATION DE L'INVENTION

L'invention permet d'éviter au moins un des inconvénients précités.

Ainsi, selon un premier aspect, l'invention concerne un avaloir d'aspiration de particules fines, selon la revendication 1.

L'avaloir de l'invention peut en outre présenter facultativement au moins l'une des caractéristiques suivantes :
- lorsque l'avaloir est en fonctionnement, la lèvre forme, en combinaison avec la paroi, un convergent progressif du bord d'attaque vers la crête ;
- la lèvre a un profil recourbé, de préférence parabolique ;
- l'embouchure comporte des moyens de positionnement de l'avaloir par rapport à la paroi pour permettre le réglage d'une distance entre la crête et la paroi ;
- les moyens de positionnement comportent des vis de mise en butée sur la paroi ;
- il comprend en outre une base comportant un hublot apte à laisser passer un faisceau laser et une partie intermédiaire entre l'embouchure et la base ;
- la partie intermédiaire est convergente entre l'embouchure et la base.

Et selon un second aspect, l'invention concerne un dispositif d'ablation laser d'une couche superficielle d'une paroi selon la revendication 8 comprenant un avaloir d'aspiration de particules fines selon la revendication 1.

Ainsi, l'invention évite que des particules contaminées ne ressortent de l'avaloir, à la fois car les éventuels tourbillons ne peuvent repousser les particules vers l'extérieur de l'avaloir, en fonctionnement, mais également car les éventuels dépôts de particules sont situés en partie interne de l'avaloir, et donc facilement contrôlables lors de manipulations ultérieures.

### PRESENTATION DES FIGURES

D'autres caractéristiques et avantages de l'invention ressortiront encore de la description qui suit, laquelle est purement illustrative et non limitative, et doit être lue en regard des figures annexées sur lesquelles, outre les figures 1 et 2 déjà discutées :
- les figures 3a et 3b illustrent respectivement une vue selon une section droite de l'embouchure d'un avaloir et une vue de dessus ;
- les figures 4a et 4b illustrent respectivement une vue selon une section droite et une vue de dessus de l'embouchure de l'avaloir selon l'intention
- la figure 5 illustre des moyens de positionnement de l'embouchure de l'avaloir par rapport à une paroi à décontaminer.

Sur l'ensemble des figures, les éléments similaires portent des références numériques identiques.

### DESCRIPTION DETAILLEE

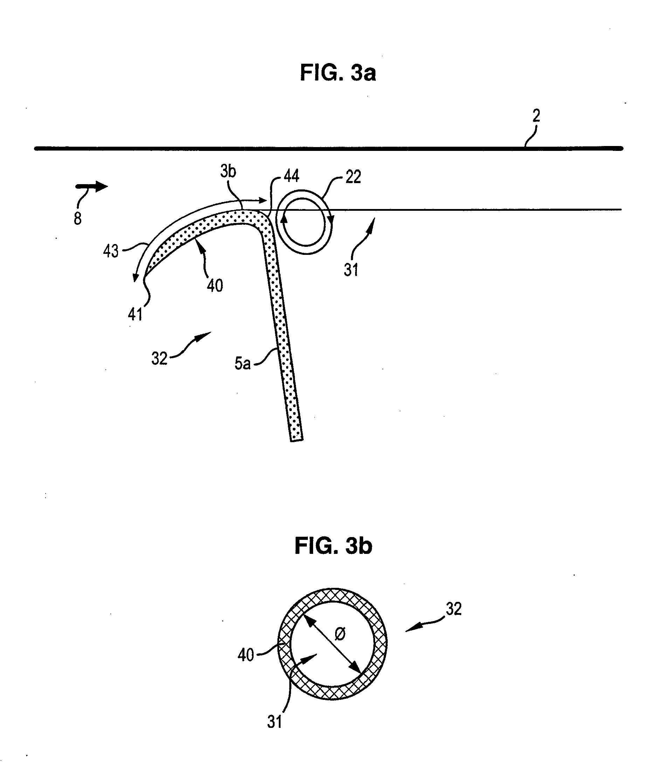

Un avaloir d'aspiration de particules fines comprend, comme représenté sur la figure 1, une embouchure 30 d'entrée d'air comportant une crête 3b destinée à être disposée à proximité d'une paroi 2 pouvant émettre des particules fines. La crête 3b définit une partie interne 31 de l'avaloir et une partie externe 32 (voir figure 3b). La crête 3b fait partie de la partie externe 32 de l'avaloir.

L'avaloir comprend en outre une sortie d'aspiration 5 destinée à aspirer les particules fines (voir figure 1).

On a illustré sur les figures 3a et 3b une vue en coupe droite et de dessus de l'embouchure d'un avaloir qui évite que des particules contaminées ne ressortent de ce dernier.

L'avaloir comporte en particulier une lèvre 40 externe - la lèvre appartient à la partie externe 32 de l'avaloir - s'étendant vers la sortie d'aspiration 5 et comportant un bord 41 d'attaque situé du même côté que la sortie 5 d'aspiration par rapport à la crête 3b.

Une telle lèvre 40 permet, lorsque l'avaloir est en fonctionnement, que l'air 8 aspiré ne subisse aucun décollement de l'air à partir du profil, et que l'écoulement n'est soit pas turbulent au niveau de la lèvre 40.

Lorsque l'avaloir est en fonctionnement, la lèvre 40 forme ainsi, en combinaison avec la paroi 2, un convergent, progressif du bord 41 d'attaque vers la crête 3b. Il n'y a aucun décollement de l'air à partir de la lèvre 40 dans la partie externe 32, car il y a un rétrécissement progressif de la section de passage de l'écoulement d'air entre la partie externe 32 et la crête 3b.

Une zone de décollement de l'air ne se situe qu'en partie interne 31 de l'avaloir, comme on le voit sur la figure 3a par exemple. En d'autres termes, l'air 8 entrant dans l'avaloir suit la lèvre 40 comme le montre la flèche 43, et ne subit un décollement turbulent de l'avaloir qu'une fois entré dans la partie interne 31 de l'avaloir. Le fait que la zone de décollement ne se situe qu'en partie interne 31 confère un confinement dynamique de tourbillons 22, générés par le décollement de l'air, en partie interne 31.

En effet, contrairement à l'embouchure 30 représentée sur les figures 2a et 2b, il n'y a pas d'angle vif qui engendre un décollement avant que l'air 8 ne soit entré dans l'avaloir. L'air 8 entre dans l'avaloir en suivant la lèvre 40 qui forme un convergent progressif entre le bord d'attaque 41 et la crête 3b.

Préférentiellement, la lèvre 40 a un profil recourbé, dont la section droite peut être avantageusement à section parabolique. Comme le montre la figure 3a notamment, le côté convexe du profil recourbé est dirigé vers la paroi 2.

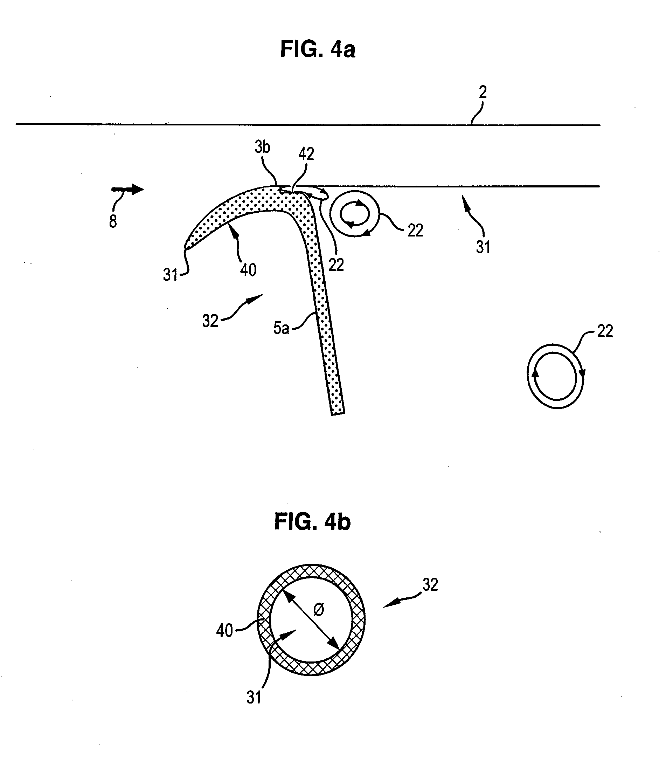

Comme le montre la figure 4a, de manière avantageuse, l'embouchure 30 peut comprendre un épaulement 42 situé en partie interne 31, apte à former un piège à tourbillons au-delà de la crête 3b, dans la zone de décollement, de sorte que, lorsque l'avaloir est en fonctionnement, les tourbillons 22 restent à l'intérieur de l'avaloir par rapport à la paroi 2, en dessous du niveau de la crête 3b par rapport à la paroi 2.

Ainsi, si des particules se déposent au niveau de l'embouchure 30 les tourbillons 22 ne repousseront pas vers l'extérieur les particules contaminées. Les dépôts de particules sont également localisés sur l'épaulement 42, et peuvent facilement être nettoyés lors d'une opération ultérieure.

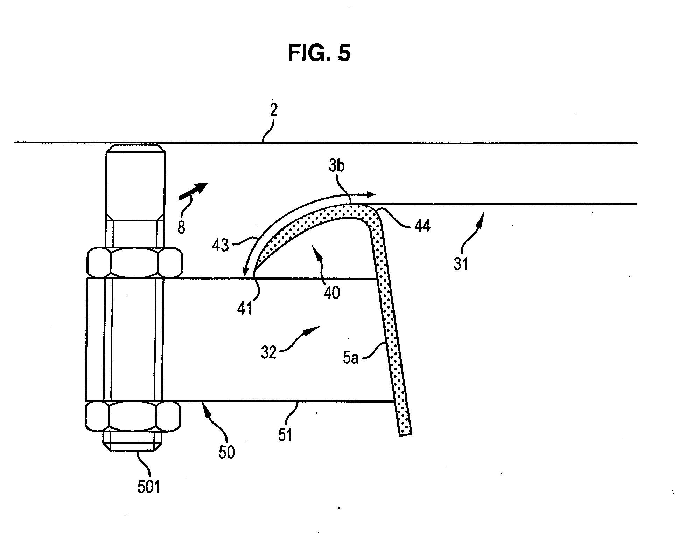

Pour pouvoir positionner l'avaloir correctement par rapport à la paroi 2, l'avaloir peut comprendre des moyens 50 de positionnement de l'avaloir par rapport à la paroi 2 (voir figure 5).

Ces moyens 50 de positionnement permettent le réglage d'une distance entre la crête 3b et la paroi 2, pour permettre d'adapter le débit d'entrée d'air.

Ces moyens 50 peuvent par exemple comporter des vis 501 coopérant avec un support 51 solidaire de l'embouchure 30, les extrémités des vis 501 venant en butée sur la paroi 2. Ces vis 501 sont préférablement situées à l'extérieur, à distance de la lèvre 40 d'entrée dans l'avaloir.

Conformément à la figure 1, l'avaloir peut en outre comprendre une base 3a comportant un hublot 3 apte à laisser passer un faisceau laser 6 et une partie intermédiaire 5a entre l'embouchure 3b et la base 3a.

La partie intermédiaire 5a l'avaloir est préférentiellement convergente entre l'embouchure 3b et la base 3a.

A titre d'exemple, on peut réaliser un avaloir avec les dimensions suivantes :
- Hauteur de l'avaloir 1: 450 mm ;
- Largeur de la base 3a: 160 mm ;
- Diamètre Φ de l'embouchure 30 au niveau de la crête 3b: 360 mm ;
- Distance entre la crête 3b et la paroi 2 : 10 mm ;
- Distance entre le bord 41 d'attaque de la lèvre 40 et la paroi 2 : 20 mm ;
- Longueur du profil de la lèvre : 16 mm ;
- Débit d'air aspiré : 60 litres par seconde ;
- Vitesse moyenne de l'air entre la crête et la paroi 2 : 4 m/s.

## Revendications

1. Avaloir d'aspiration de particules fines, comprenant
- une embouchure (30) d'entrée d'air comportant une crête (3b) destinée à être disposée à proximité d'une paroi (2) pouvant émettre des particules fines, la crête (3b) définissant une partie interne (31) de l'avaloir et une partie externe (32) ; et
- une sortie d'aspiration (5) destinée à aspirer les particules fines ;
dans lequel l'embouchure (30) comporte en outre une lèvre (40) externe s'étendant vers la sortie d'aspiration (5) et comportant un bord (41) d'attaque situé du même côté que la sortie (5) par rapport à la crête (3b), de sorte que, lorsque l'avaloir est en fonctionnement, l'air (8) aspiré ne subit aucun décollement au niveau de la lèvre (40) et qu'une zone de décollement de l'air ne se situe qu'en partie interne (31) de l'avaloir et **caracterisé en ce que** l'embouchure (30) comporte en outre un épaulement (42) interne apte à former un piège à tourbillons au-delà de la crête (3b) dans la zone de décollement, de sorte que, lorsque l'avaloir est en fonctionnement, les tourbillons restent à l'intérieur de l'avaloir par rapport à la paroi (2).

2. Avaloir selon la revendication 1, dans lequel, lorsque l'avaloir est en fonctionnement, la lèvre (40) forme, en combinaison avec la paroi (2), un convergent progressif du bord (41) d'attaque vers la crête (3b).

3. Avaloir selon l'une des revendications 1 à 2, dans lequel la lèvre (40) a un profil recourbé, de préférence parabolique.

4. Avaloir selon l'une des revendications 1 à 3, dans lequel l'embouchure (30) comporte des moyens (50) de positionnement de l'avaloir par rapport à la paroi (2) pour permettre le réglage d'une distance entre la crête (3b) et la paroi (2).

5. Avaloir selon la revendication 4, dans lequel les moyens (50) de positionnement comportent des vis de mise en butée sur la paroi (2).

6. Avaloir selon l'une des revendications précédentes comprenant en outre une base (3a) comportant un hublot (3) apte à laisser passer un faisceau laser (6) et une partie intermédiaire (5a) entre l'embouchure (3b) et la base (3a).

7. Avaloir selon l'une des revendications précédentes dans lequel la partie intermédiaire (5a) est convergente entre l'embouchure (3b) et la base (3a).

8. Dispositif d'ablation laser d'une couche superficielle d'une paroi comprenant au moins une source laser d'ablation, **caractérisé en ce qu'**il comprend un avaloir d'aspiration de particules fines selon l'une des revendications précédentes.

## Claims

1. Hood for sucking up fine particles, comprising
- an air intake mouth (30) comprising a crest (3b) intended to be arranged close to a wall (2) able to emit fine particles, the crest (3b) defining an internal portion (31) of the hood and an external portion (32); and
- a suction outlet (5) intended to suck up the fine particles;
wherein the mouth (30) further comprises an external lip (40) extending towards the suction outlet (5) and comprising a leading edge (41) located on the same side as the outlet (5) in relation to the crest (3b), in such a way that, when the hood is in operation, the sucked-up air (8) undergoes no separation at the lip (40) and that an air separation zone is located only in the internal portion (31) of the hood and **characterised in that** the mouth (30) further comprises an internal shoulder (42) able to form a vortex trap beyond the crest (3b) in the separation zone, in such a way that, when the hood is in operation, the vortices remain inside the hood in relation to the wall (2).

2. Hood according to claim 1, wherein, when the hood is in operation, the lip (40) forms, in combination with the wall (2), a progressive convergent of the leading edge (41) towards the crest (3b).

3. Hood according to one of claims 1 to 2, wherein the lip (40) has a curved profile, more preferably parabolic.

4. Hood according to one of claims 1 to 3, wherein the mouth (30) comprises means (50) of positioning the hood in relation to the wall (2) in order to allow for the adjusting of a distance between the crest (3b) and the wall (2).

5. Hood according to claim 4, wherein the means (50) of positioning comprise stop screws on the wall (2).

6. Hood according to one of the preceding claims further comprising a base (3a) comprising a porthole (3) able to allow a laser beam (6) to pass through and an intermediary portion (5a) between the mouth (3b) and the base (3a).

7. Hood according to one of the preceding claims wherein the intermediary portion (5a) is convergent between the mouth (3b) and the base (3a).

8. Device for the laser ablation of a surface layer of a wall comprising at least one laser source of ablation, **characterised in that** it comprises a hood for sucking up fine particles according to one of the preceding claims.

## Patentansprüche

1. Absaugablauf zum Absaugen von Feinpartikeln, aufweisend:
- eine Lufteingangsmündung (30), die eine Haube (3b) aufweist, die vorgesehen ist, nahe einer Feinpartikel emittierenden Wand (2) angeordnet zu werden, wobei die Haube (3b) einen Innenabschnitt (31) des Ablaufs und einen Außenabschnitt (32) festlegt; und
- einen Absaugausgang (5), der vorgesehen ist, die Feinpartikel abzusaugen;
wobei die Mündung (30) weiterhin eine Außenlippe (40) aufweist, die sich in Richtung des Absaugausgangs (5) erstreckt und einen Angriffsrand (41) aufweist, der an der gleichen Seite wie der Ausgang (5) in Bezug auf die Haube (3b) angeordnet ist, so dass bei Betrieb des Ablaufs die angesaugte Luft (8) keine Ablösung bei der Lippe (40) erfährt und eine Luftablösungszone nur bei dem Innenabschnitt (31) des Ablaufs angeordnet ist, **dadurch gekennzeichnet, dass** die Mündung (30) weiterhin einen Innenabsatz (42) aufweist, der eingerichtet ist, eine Wirbelfalle über die Haube (3b) hinaus in der Ablösezone auszubilden, so dass bei Betrieb des Ablaufs die Wirbel innerhalb des Ablaufs in Bezug auf die Wand (2) verbleiben.

2. Ablauf gemäß Anspruch 1, wobei bei Betrieb des Ablaufs die Lippe (40) in Kombination mit der Wand (2) fortschreitend konvergent von dem Angriffsrand (41) in Richtung der Haube (3b) verläuft.

3. Ablauf gemäß einem der Ansprüche 1 bis 2, wobei die Lippe (40) ein gekrümmtes Profil, vorzugsweise ein parabolisches Profil, hat.

4. Ablauf gemäß einem der Ansprüche 1 bis 3, wobei die Mündung (30) Mittel (50) zur Positionierung des Ablaufs in Bezug auf die Wand (2) aufweist, um eine Einstellung eines Abstandes zwischen der Haube (3b) und der Wand (2) zu ermöglichen.

5. Ablauf gemäß Anspruch 4, wobei die Mittel (50) zur Positionierung Schrauben als Anschlag an der Wand (2) aufweisen.

6. Ablauf gemäß einem der vorangehenden Ansprüche, weiterhin aufweisend eine Basis (3a), die ein Fenster (3) aufweist, das eingerichtet ist, einen Laserstrahl (6) durchzulassen, und einen Zwischenabschnitt (5a) zwischen der Mündung (3b) und der Basis (3a).

7. Ablauf gemäß einem der vorangehenden Ansprüche, wobei der Zwischenabschnitt (5a) konvergent zwischen der Mündung (3b) und der Basis (3a) verläuft.

8. Vorrichtung zur Laserablation einer Oberflächenschicht einer Wand, wobei die Vorrichtung zumindest eine Ablationslaserquelle aufweist, **dadurch gekennzeichnet, dass** sie einen Absaugablauf zum Absaugen von Feinpartikeln gemäß einem der vorangehenden Ansprüche aufweist.
